(19) Europäisches Patentamt
European Patent Office
Office européen des brevets

(11) EP 2 610 702 A2

## EUROPEAN PATENT APPLICATION
published in accordance with Art. 153(4) EPC

(43) Date of publication:
03.07.2013 Bulletin 2013/27

(21) Application number: 11820107.8

(22) Date of filing: 12.07.2011

(51) Int Cl.:
G06F 1/32 (2006.01)        G06F 1/04 (2006.01)

(86) International application number:
PCT/KR2011/005094

(87) International publication number:
WO 2012/026679 (01.03.2012 Gazette 2012/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 24.08.2010 KR 20100081959

(71) Applicant: Yi, Joonhwan
Seongnam-si 463-777 (KR)
(72) Inventor: Yi, Joonhwan
Seongnam-si 463-777 (KR)

(74) Representative: Harrison, Michael Robert
Harrison IP
1st Floor
Box Tree House
Northminster Business Park
Northfield Lane
York, YO26 6QU (GB)

(54) **POWER CONSUMPTION PREDICTION METHOD FOR CLOCK-GATING INTEGRATED CIRCUIT DEVICE**

(57) A power consumption prediction method for an integrated circuit device is provided. The power consumption prediction method includes detecting a clock gating cell of the integrated circuit device to extract clock gating domains of the integrated circuit device, extracting a power consumption model of the integrated circuit device according to clock gating based on the extracted clock gating domains, and estimating power consumption of the integrated circuit device based on the extracted power consumption model.

Fig. 4

Start

Extract clock gating domains — S100

Extract power consumption model based on the clock gating domains — S200

Evaluate power consumption of integrated circuit device based on the extracted power consumption model — S300

End

**Description**

BACKGROUND OF THE INVENTION

1. Field of the Invention

The present invention relates to electronic circuits and, more particularly, to a power consumption prediction method for an integrated circuit device.

2. Description of the Related Art

With the advance in electronic technologies, various types of integrated circuit devices have been developed. An integrated circuit device means an electronic device in which various functions such as operation, storage, etc. are integrated into a single semiconductor chip.

Various types of mobile devices have been developed to keep pace with the advance of society. Mobile devices include integrated circuit devices to pursue miniaturization and lightness. Mobile devices are disadvantageous in a limited power source such as a battery. High capacity of batteries and low power consumption of integrated circuit devices have been studied to extend operation lifetime of mobile devices.

Prediction of power consumption of an integrated circuit device is a precondition for achieving low power consumption of the integrated circuit device. Conventional power consumption prediction methods suffer from disadvantages such as long prediction time and/or low prediction accuracy.

Various methods have been proposed to overcome the foregoing disadvantages. According to the existing methods, a person who understands operations of a target integrated circuit device extracts power states that are significant circuit states in terms of power consumption and generates a power model based on the power states. Unfortunately, the existing methods impose the problems that the performance (prediction speed and accuracy) of a power model largely varies depending on knowledge and experience of those who perform these methods. Moreover, it is difficult to automate these methods.

SUMMARY OF THE INVENTION

Embodiments of the present invention provide a power consumption prediction method for an integrated circuit device with reduced prediction time and improved accuracy.

According to an aspect of the present invention, a power consumption prediction method for an integrated circuit device may include detecting a clock gating cell of the integrated circuit device to extract clock gating domains of the integrated circuit device; extracting a power consumption model of the integrated circuit device according to clock gating based on the extracted clock gating domains; and estimating power consumption of the integrated circuit device based on the extracted power consumption model.

In an example embodiment, extracting a power consumption model may include extracting driving signals driving the extracted clock gating domains; and extracting a set of power states according to logical values of the extracted driving signals.

In an example embodiment, some of the extracted set of power states may be removed based on equivalence between the driving signals.

In an example embodiment, some of the extracted set of power states may be removed based on dominance between the driving signals.

In an example embodiment, extracting a power consumption model may further include extracting a set of power consumptions of the integrated circuit device corresponding to the extracted set of power states.

In an example embodiment, extracting a set of power consumptions may include calculating power states and power consumptions of the integrated circuit device according to a clock cycle under normal operation conditions of the integrated circuit device; and determining power consumptions corresponding to the calculated power states based on the calculated power states and power consumptions.

In an example embodiment, determining power consumptions corresponding to the calculated power states may include determining average power consumptions corresponding to the calculated power states based on the calculated power states and power consumptions.

In an example embodiment, the average power consumptions may be determined to compensate variation depending on data dependency.

In an example embodiment, extracting a power consumption model may include extracting driving signals driving the clock gating domains; and determining power consumptions respectively corresponding to the driving signals.

In an example embodiment, extracting a power consumption model may further include extracting fan-in logic cones driving the driving signals based on the input signals of the integrated circuit device.

In an example embodiment, estimating power consumption of the integrated circuit device may include estimating power consumption of the integrated circuit device based on input signals of the integrated circuit device, the extracted set of power states, and the extracted set of power consumptions.

In an example embodiment, the clock gating domains may be extracted based on a register transfer level design of the integrated circuit device.

In an example embodiment, the clock gating domains may be extracted based on a gate level design of the integrated circuit device.

In an example embodiment, the power consumption prediction method may further include extracting power gating domains of the integrated circuit device;

extracting a power consumption model of the integrated circuit device based on power gating, based on the extracted power gating domains; and estimating power consumption of the integrated circuit device based on the extracted power consumption model.

According to another aspect of the present invention, a power consumption prediction method for an integrated circuit device may include extracting fan-in logic cones of clock driving signals of the integrated circuit device; calculating power consumptions according to logic states of the clock driving signals; receiving the input and clock signals transmitted to the integrated circuit device; and estimating power consumption of the integrated circuit device based on the extracted fan-in logic cones, the calculated power consumptions, and the received input signal and clock signals.

In an example embodiment, the power consumption of the integrated circuit device is estimated according to variation of the received input and clock signals.

BRIEF DESCRIPTION OF THE DRAWINGS

The present invention will become more apparent in view of the attached drawings and accompanying detailed description. The embodiments depicted therein are provided by way of example, not by way of limitation, wherein like reference numerals refer to the same or similar elements. The drawings are not necessarily to scale, emphasis instead being placed upon illustrating aspects of the present invention.

FIG. 1 is a block diagram of an integrated circuit device according to an embodiment of the present invention.

FIG. 2 is a block diagram illustrating a clock gating operation of the integrated circuit device in FIG. 1.

FIG. 3 is a block diagram illustrating an embodiment of the first module in FIG. 1.

FIG. 4 is a flowchart illustrating a power consumption prediction method for an integrated circuit device according to an embodiment of the present invention.

FIG. 5 is a table illustrating an embodiment of clock gating domains extracted at the step S 100 in FIG. 4.

FIG. 6 is a flowchart illustrating extracting a power consumption model in FIG. 4.

FIG. 7 is a table showing clock gating domains extracted at the step S200 in FIG. 4 and a set of corresponding driving signals.

FIG. 8 is a table showing all clock gating domains extracted at the step S200 in FIG. 4, the set of corresponding driving signals, and the set of power states based on the driving signals.

FIG. 9 is a table showing a reduced set of power states based on equivalence.

FIG. 10 is a table showing a reduced set of power states based on dominance.

FIG. 11 is a table showing all clock gating domains extracted at the step S200 in FIG. 4, the set of corresponding driving signals, the set of power states based on the driving signals, and the corresponding set of power consumptions.

FIG. 12 illustrates a method for extracting a set of power consumptions in FIGS. 6 and 11.

FIG. 13 is a table showing all clock gating domains extracted at the step S200 in FIG. 4, the set of corresponding driving signals, the set of power states based on the driving signals, the corresponding set of power consumptions, and a set of extracted fan-in logic cones.

FIG. 14 is a block diagram of an integrated circuit device according to a second embodiment of the present invention.

FIG. 15 a block diagram of an integrated circuit device according to a third embodiment of the present invention.

FIG. 16 is a block diagram illustrating an embodiment of a gate level of a fan-in logic cone.

FIGS. 17 to 19 illustrate a hardware description in SystemC of the fan-in logic cone in FIG. 16.

FIG. 20 is a block diagram illustrating a second embodiment of a gate level of a fan-in logic cone.

FIGS. 21 and 22 illustrate a hardware description in Verilog of the fan-in logic cone in FIG. 20.

FIG. 23 is a table showing a reduced set of power states based on independency.

DETAILED DESCRIPTION OF EMBODIMENTS

The present invention will now be described more fully hereinafter with reference to the accompanying drawings, in which embodiments of the invention are shown. This invention may, however, be embodied in many different forms and should not be construed as limited to the embodiments set for the herein. Rather, these embodiments are provided so that this disclosure will be thorough and complete, and will fully convey the scope of the invention to those skilled in the art.

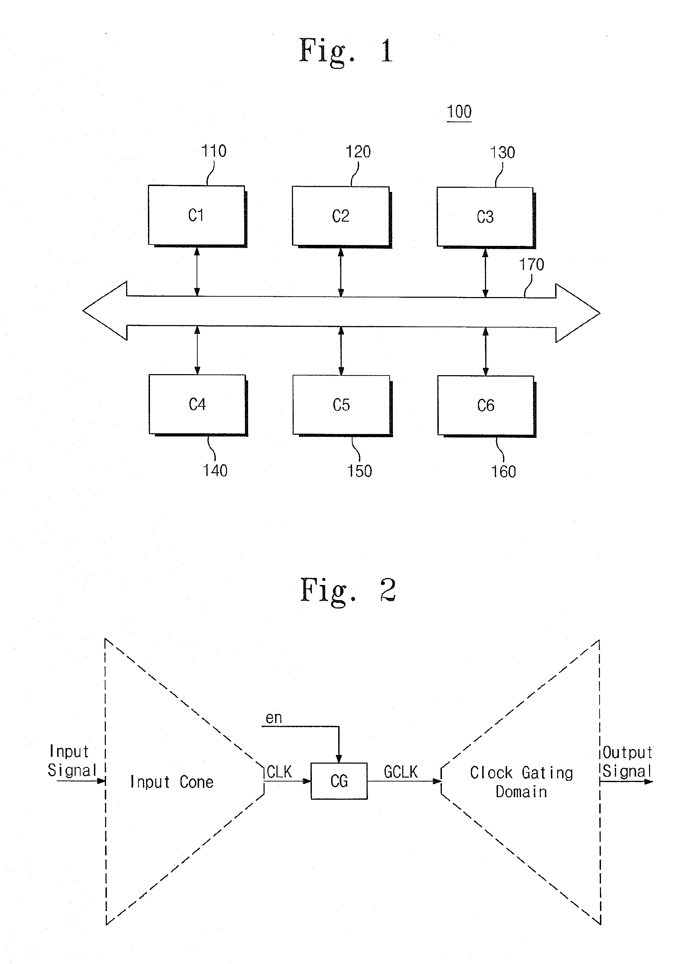

FIG. 1 is a block diagram of an integrated circuit device 100 according to an embodiment of the present invention. Exemplarily, the integrated circuit device 100 may be a module based on gate level (GL), register transfer level (RTL) or electronic system level (ESL).

In case of a module based on ESL, a clock gating domain is extracted using a gate level corresponding to the module or a register transfer level module. That is, modules based on the above-mentioned three types of levels may be combined somehow to be used in simulation of circuit operations. However, an ESL is usually used for high-speed simulation. However, in case of the ESL, there is no existing technology for accurately evaluating or predicting power consumption. Accordingly, a current situation is that a GL module or an RTL module of low-simulation speed is simulated to predict power. In case of using a clock gating based power model proposed in the present invention, the amount of power consumption may be accurately predicted while a high-speed simulation is performed with ESL modules.

Referring to FIG. 1, an integrated circuit device 100 includes first to sixth modules 110~160 and an internal bus 170. The first to sixth modules 110~160 are modules based on gate level (GL), register transfer level (RTL) or electronic system level (ESL). As mentioned above, three types of levels may be combined to constitute modules.

The first to sixth modules 110~160 are configured to operate independently. The first to sixth modules 110~160 are configured to exchange data through the internal bus 170. Exemplarily, the internal bus 170 may also be a module based on gate level (GL), register transfer level (RTL) or an electronic system level (ESL). As mentioned above, three types of levels may be combined to constitute a module.

Exemplarily, at least one module may constitute at least of various components such as a clock generator, a power generator, a clock controller, a power controller, a core, and an input/output interface.

Exemplarily, it has been described that the integrated circuit device 100 includes the first to sixth modules 110~160 and the internal bus 170. However, the integrated circuit device 100 is not limited thereto. For example, a specific module may be removed from the integrated circuit device 100 or at least one module may be further provided to the integrated circuit device 100.

In order to reduce power consumption, the integrated circuit device 100 is configured to perform a clock gating operation. The clock gating operation means an operation in which dynamic power consumption of an idle-state region is reduced by supplying clocks to an enabled region in the integrated circuit device 100 and stopping the supply of clocks to an disabled region.

FIG. 2 is a block diagram illustrating a clock gating operation of the integrated circuit device 100 in FIG. 1. Referring to FIG. 2, an input cone, a clock gating cell CG, and a clock gating domain are shown.

The input cone is configured to control a driving signal en in response to the input signals. For example, the input cone may be configured to control the driving signal en to a logic level low or a logic level high.

The clock gating cell CG is configured to stop or resume clock supply of the clock gating domain in response to the driving signal en. For example, the clock gating cell CG is configured to receive a clock CLK and output the gated clock GCLK in response to the driving signal en. The gated clock GCLK is transferred to the clock gating domain.

The clock gating domain receives the gated clock GCLK from the clock gating cell CG. The clock gating domain is configured to operate in response to the gated clock GCLK. For example, the clock gating domain may output an output signal in response to the gated clock GCLK.

If the clock gating cell CG stops outputting the gated clock GCLK, the clock gating domain may stop operating. For example, the clock gating domain may stop operating while retaining stored data. That is, the dynamic power consumption of the clock gating domain may be reduced.

If the clock gating cell resumes outputting the gated clock GCLK, the clock gating domain may resume operating. For example, the clock gating domain may transfers data between internal registers in response to the gated clock GCLK. Transition of logic states of internal registers causes dynamic power consumption of the clock gating domain.

As shown in FIG. 2, a fan-out logic cone where clock supply is controlled by one driving signal *en* is called a clock gating domain. Each module of the integrated circuit device 100 include at least one clock gating domain.

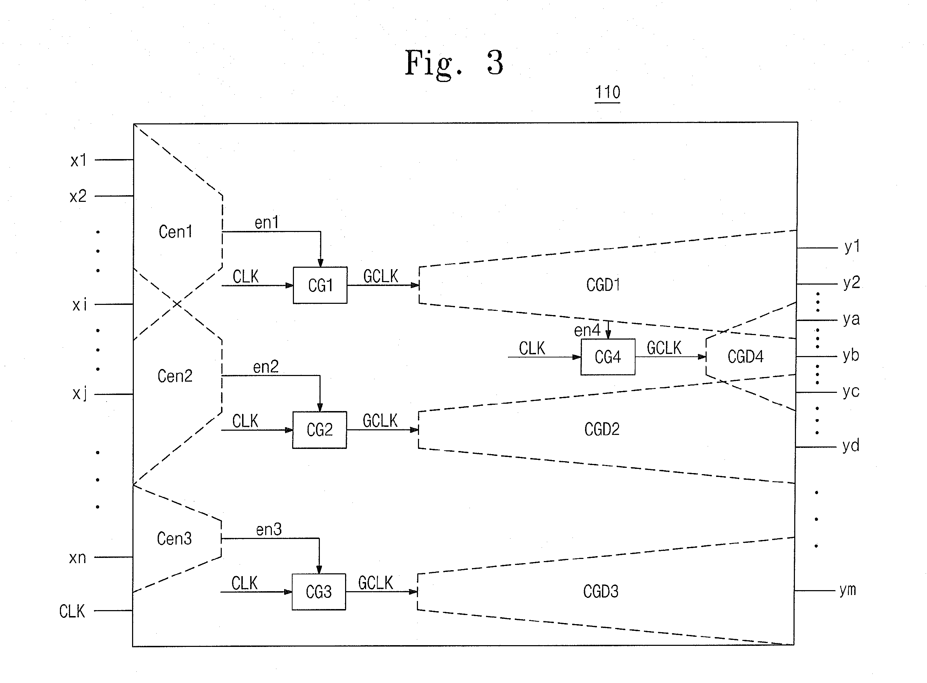

FIG. 3 is a block diagram illustrating an embodiment of the first module 110 in FIG. 1. Referring to FIG. 3, the first module 110 includes first to third fan-in logic cones Cen1~Cen3, first to fourth clock gating cells CG1~CG4, and first to fourth clock gating domains CGD1~CGD4.

A fan-in logic cone Cen indicates a component of the first module 110 driving a driving signal en transmitted to a clock gating cell CG in response to input signals x1~xn of a module.

The first fan-in logic cone Cen1 is configured to drive the first driving signal en1 in response to input signals of the first module 110. The first driving signal en1 is transmitted to the first clock gating cell CG1.

The first clock gating cell CG1 is configured to output the gated clock GCLK in response to the first driving signal en1. The output of the first clock gating cell CG1 is transmitted to the first clock gating domain CG1.That is, the first clock gating cell CG1 is configured to enable or disable the first clock gating domain CGD1 in response to the first driving signal en1.

The second fan-in logic cone Cen2 is configured to drive the second driving signal en2 in response to the input signals of the first module 110. The second driving signal en2 is transmitted to the second clock gating cell CG2.

The second clock gating cell CG2 is configured to output the gated clock GCLK in response to the second driving signal en2. The output of the second clock gating cell CG2 is transmitted to the second clock gating domain CGD2. That is, the second clock gating cell CG2 is configured to enable or disable the second clock gating domain CGD2 in response to the second driving signal en2.

The third fan-in logic cone Cen3 is configured to drive the third driving signal en3 in response to the input signals of the first module 110. The third driving signal en3 is transmitted to the third clock gating cell CG3.

The third clock gating cell CG3 is configured to output the gated clock GCLK in response to the third driving signal en3. The output of the third clock gating cell CG3 is transmitted to a third clock gating domain CGD3. That is, the third clock gating cell CG3 is configured to enable or disable the third clock gating domain CGD3 in response to the third driving signal en3.

The fourth clock gating cell CG4 is configured to receive the fourth driving signal en4 from the first clock gating domain CG1.The fourth clock gating cell CG4 is configured to output the gated clock GCLK in response to the fourth driving signal en4. An output of the fourth clock gating cell CG4 is transmitted to the fourth clock gating domain CGD4. That is, the fourth clock gating cell CG4 is configured to enable or disable the fourth clock gating domain CGD4 in response to the fourth driving signal en4.

The first clock gating domain CG1.is enabled or disabled in response to the first driving signal en1 and configured to output the fourth driving signal en4. That is, the first clock gating domain CGD1 functions as a clock gating domain of the first clock gating cell CG1 and is configured to function as a fan-in logic cone of the fourth clock gating cell CG4.

When the first clock gating domain CGD1 remains enabled, the fourth clock gating domain CGD4 may be enabled or disabled according to the fourth driving signal en4. When the first clock gating domain CGD1 remains disabled, the fourth clock gating domain CGD4 may always be disabled. In this case, the first clock gating domain CGD1 dominates the fourth clock gating domain CGD4.

In FIG. 3, it has been described that the first to third fan-in logic cones Cen1~Cen3, the first to fourth clock gating cells CG1~CG4, and first to fourth clock gating domains CGD1~CGD4 are connected to the first to fourth driving signals en1~en4, the clock CLK, and the gated clock GCLK. However, the first to third fan-in logic cones Cen1~Cen3, the first to fourth clock gating cells CG1~CG4, and first to fourth clock gating domains CGD1~CGD4 may be connected through various internal signals.

In FIG. 3, an embodiment of the first module 110 of the integrated circuit device 100 has been described. However, similar to the first module 110, the other modules of the integrated circuit device 100 may configured to include at least one fan-in logic cone Cen, at least one clock gating cell CG, and at least one clock gating domain CGD.

As described above, the integrated circuit device 100 includes multiple clock gating domains, and the power consumption of the integrated circuit device 100 varies depending on enabled and disabled states of the clock gating domains. However, conventional evaluation or prediction methods of power consumption suffer from low accuracy or long evaluation time because clock gating domains are not explicitly considered. A power prediction method of the integrated circuit device 100 according to an embodiment of the present invention is characterized in that power consumption is evaluated or estimated based on a clock gating domain of the integrated circuit device 100. Thus, a power consumption prediction method of the integrated circuit device 100 with improved accuracy and reduced prediction time is provided.

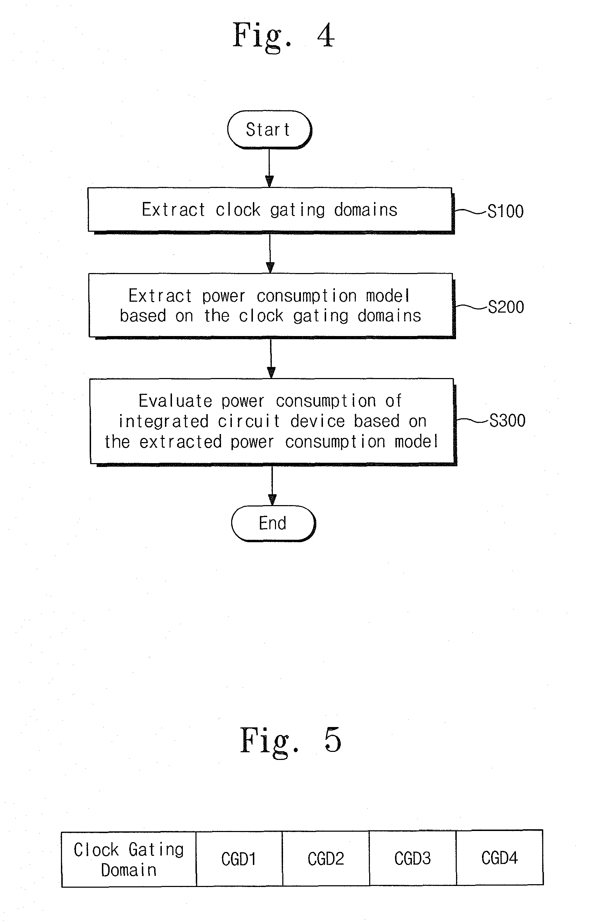

FIG. 4 is a flowchart illustrating a power consumption prediction method for an integrated circuit device 100 according to an embodiment of the present invention. Referring to FIGS. 1 and 4, at the step S100, clock gating domains CGD are extracted. For example, at least one of modules of the integrated circuit device 100 or clock gating domains CGD of the integrated circuit device 100 are extracted.

For example, the clock gating domains CGD may be extracted based on a gate-level design of the integrated circuit device 100. The clock gating domain CGD may be extracted by detecting a clock gate cell CG based on a gate-level netlist of the integrated circuit device 100. For example, the netlist may include a part defining the clock gating cell CG. The clock gating domain CGD may be extracted by detecting the part defining the clock gating cell CG and tracking an output signal of the clock gating cell CG.

For example, the clock gating domains CGD may be extracted based on a register transfer level design of the integrated circuit device 100. The clock gating domain CGD may be extracted by detecting a clock gating cell CG at the register transfer level RTL of the integrated circuit device 100. For example, at the register transfer level RTL of the integrated circuit device 100, a part instantiating a clock gating cell CG may be provided in form of conditional sentence. The clock gating domain CGD may be extracted by detecting the part instantiating a clock gating cell CG and tracking an output signal of the clock gating cell CG.

Exemplarily, the conditional sentence of instantiating the clock gating cell CG may be defined by the Equation (1).

<u>Equation (1)</u>

$$ \text{if}(en=1) \quad D_0 \Leftarrow D_i $$

Referring to the Equation (1), when a driving signal en has a true value (=1), i.e., the driving signal en is enabled, a value of a flipflop input node Di is transferred to a flipflop output node Do. That is, a clock CLK input to a clock gating cell CG is output as a gated clock GCLK from the clock gating cell CG. Meanwhile, when the driving signal en has a false value (=0), i.e., the driving signal en is disabled, a value of the input node Di is not output to the output node Do. That is, the clock gating cell CG stops the supply of the gated clock GCLK.

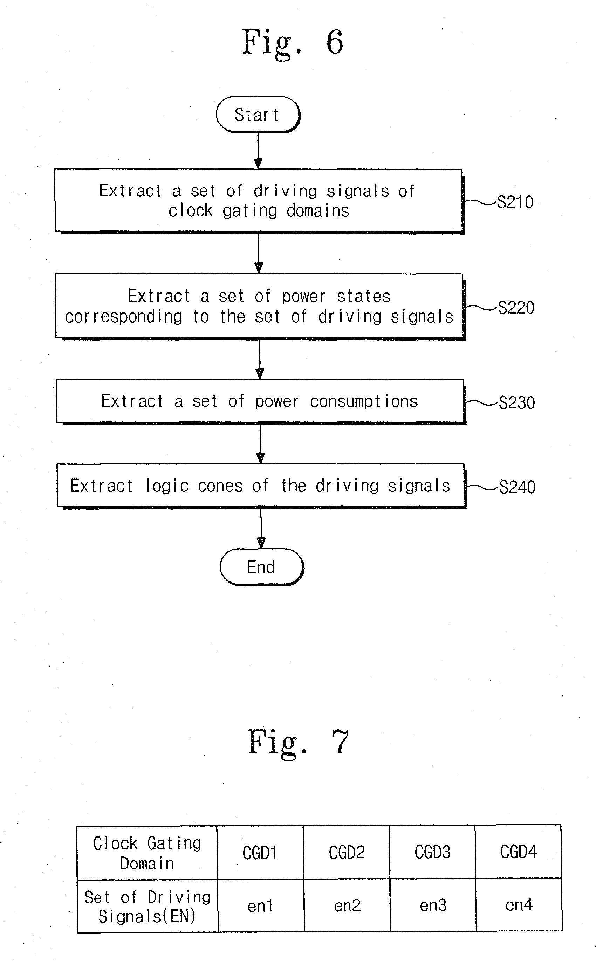

At step S200, a power consumption model is extracted based on the clock gating domains CGD. For example, a power consumption model based on enabled and disabled states of the clock gating domains CGD may be extracted. At the step S200 will be described in further detail with reference to FIG. 6.

At step S300, power consumption of the integrated circuit device 100 is predicted based on the extracted power consumption model. That is, the power consumption of the integrated circuit device 100 is predicted considering the enabled and disabled states of the clock gating domains CGD.

FIG. 5 is a table illustrating an embodiment of the clock gating domains CGD extracted at the step S 100 in FIG. 4. Referring to FIG. 5, it is shown that the first to fourth clock gating domains CGD1~CGD4 of the first module 110 are extracted.

FIG. 6 is a flowchart illustrating the step S200 of FIG. 4, at which the power model is extracted. Referring to FIG. 6, at step S210, a set EN of driving signals of the clock gating domains CGD is extracted. Exemplarily, let it be assumed that the set EN of the driving signals include first to fourth driving signals en1~en4. The clock gating domains CGD1~CGD4 extracted at the step S100 in FIG. 4 and a set EN of their corresponding driving signals are shown in FIG. 7.

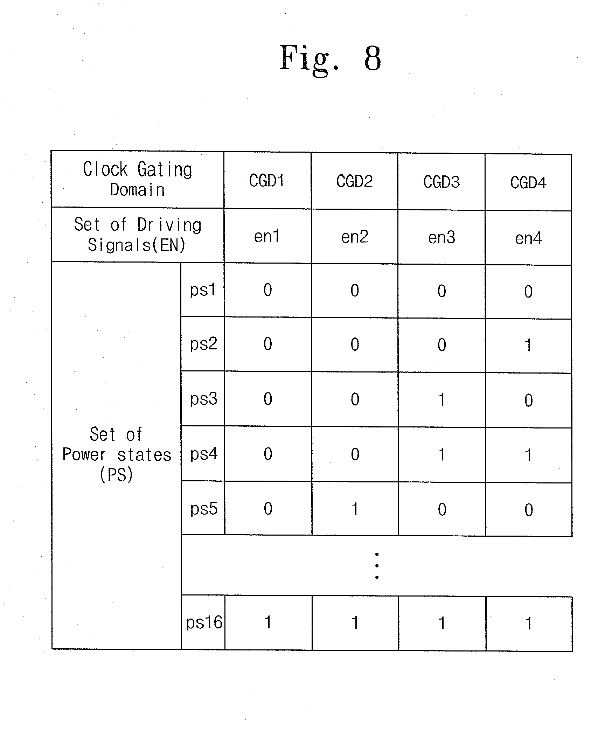

At step S220, a set PS of power states according to logic values of the driving signals en1~en4 is extracted. Exemplarily, the clock gating domains CGD1~CGD4 extracted at the step S 100 in FIG. 4, a set EN of their corresponding driving signals, and a set PS of power states are shown in FIG. 8.

Referring to FIG. 8, the first to fourth driving signals en1~en4 has the number of cases which is $2^4$ (=16). Accordingly, a set PS of power states may include first to sixteenth power states ps1~ps16.

Exemplarily, the set PS of power states may be reduced based on equivalence and dominance.

Equivalence indicates a relationship between a specific driving signal en and another driving signal en that is functionally equivalent to the specific driving signal en. For example, let it be assumed that a first driving signal en1 and a second driving signal en2 in FIG. 8 are equivalent. That is, the second driving signal en2 is also enabled when the first driving signal en1 is enabled and is also disabled when the first driving signal en1 is disabled. Similarly, the first driving signal en1 is also enabled when the second driving signal en2 is enabled and is also disabled when the second driving signal en2 is disabled.

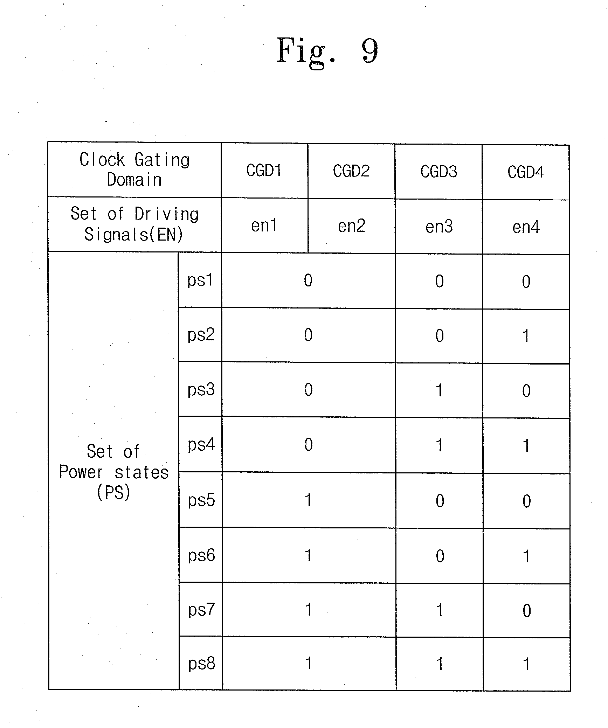

In this case, it will be understood that the first and second driving signals en1 and en2 are the same driving signal. The set PS of power states according to driving signals having equivalence may be reduced. Exemplarily, a reduced set PS of power states based on equivalence is shown in FIG. 9.

Referring to FIG. 9, the first and second driving signals en1 and en2 always have the same logic state. Accordingly, power states of driving signals en1~en4 are reduced to eight from sixteen in FIG. 8.

Exemplarily, one of the driving signals en1 and en2 having equivalence may be removed. Power consumption according to the driving signals en1 and en2 having equivalence may be evaluated or estimated based on a power state of a remaining one of the driving signals en1 and en2. For example, when the first driving signal en1 remains, the power consumption according to the first and second driving signals en1 and en2 may be evaluated or estimated based on the power state of the first driving signal en1.

Exemplarily, the driving signals en1 and en2 correspond to clock gating domains CGD1 and CGD2, respectively. That is, it will be understood that the equivalence of the driving signals en1 and en2 is equivalence of the clock gating domains CGD1 and CGD2. It will be understood that removal of the driving signal en2 is removal of the clock gating domain CGD2.

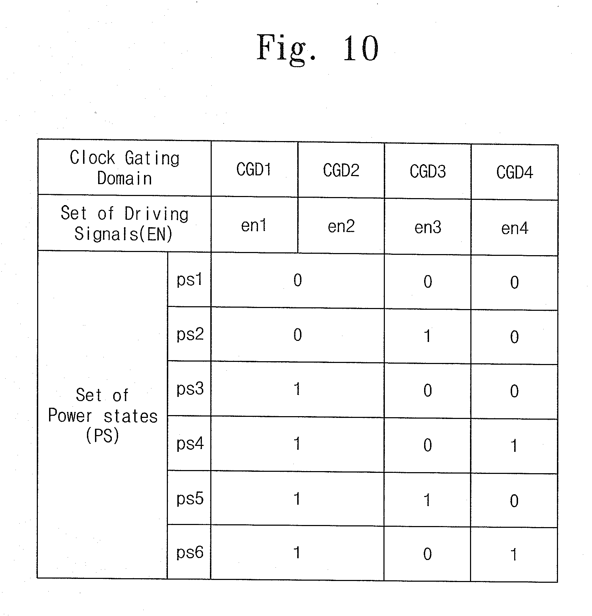

The dominance indicates a relationship between a specific driving signal and a driving signal that is dominant to the specific driving signal. Exemplarily, as described with reference to FIG. 3, the fourth driving signal en4 may be dominated by the first driving signal en1. A dominated driving signal may be enabled and disabled only when its dominating driving signal remains enabled. That is, power states may be reduced based on a dominance relationship. Exemplarily, a reduced set PS of power states based on dominance are shown in FIG. 10.

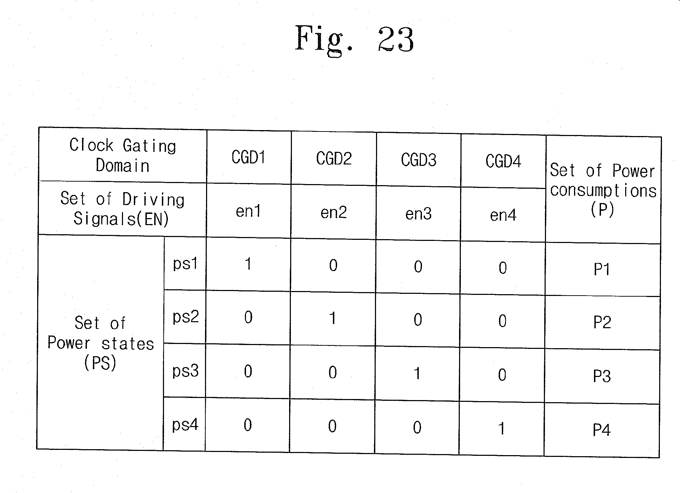

Referring to FIG. 23, if independency between clock gating domains CGD1~CGD4 is used, a set PS of power states may be reduced. That is, if all the clock gating domains CGD1~CGD4 are independent of each other, the number of power states PS is equal to the number of driving signals en1~en4. That is, extracting the set PS of power states may include sequentially selecting the extracted driving signals one by one and sequentially enabling the selected driving signal to sequentially extract power states. If independency is used, a power value of a circuit state where multiple driving signals are enabled may be calculated from the arithmetic sum of power values corresponding to power states that correspond to each enabled driving signal. For example, a power value of enabled states of the driving signals en1 and en2 may be calculated as P1+P2.

Referring to FIG. 10, when the first driving signal en1 remains disabled, the fourth driving signal en4 cannot have an enabled state. Thus, power states of the driving signals en1~en4 are reduced from eight to six.

In addition, there may be power states which cannot occur due to the functionality of the clock gating domains CGD1~CGD4. For example, the integrated circuit device 100 may be configured such that the first to fourth driving signals en1~en4 cannot have a value of '1001'. At this point, a set PS of the power states may be reduced.

Exemplarily, the driving signals en1 and en2 correspond to the clock gating domains CGD1 and CGD2, respectively. That is, it will be understood that dominance of the driving signals en1 and en2 are dominance of the clock gating domains CGD1 and CGD2.

An embodiment in which a set PS of power states is reduced has been described with reference to FIGS. 9, 10, and 23. For brevity of description, an embodiment in which a set PS of power states is not reduced will be subsequently described hereinafter.

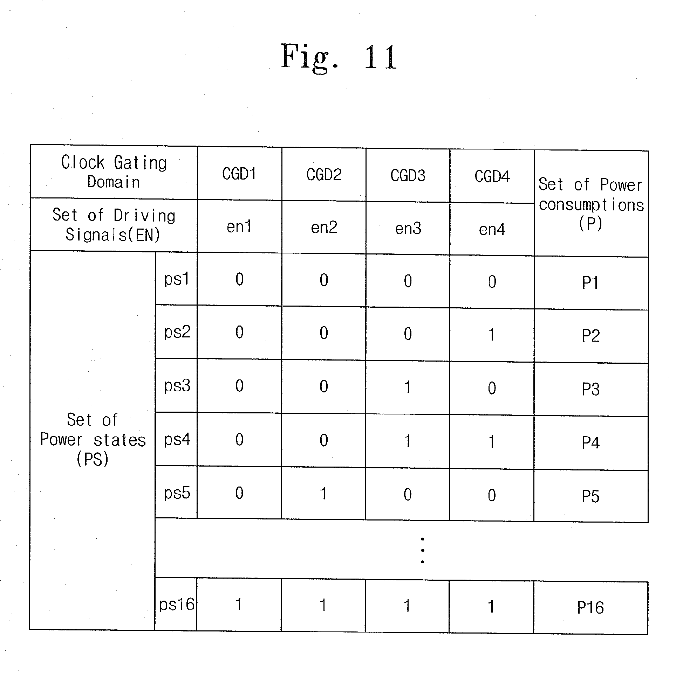

Returning to FIG. 6, at step S230, a set P of power consumptions is extracted. For example, power consumptions corresponding to the set PS of power states are extracted. Exemplarily, the clock gating domains CGD1~CGD4 extracted at the step S 100 in FIG. 4 and their corresponding sets of driving signals EN, power states PS, and power consumptions P are shown in FIG. 11.

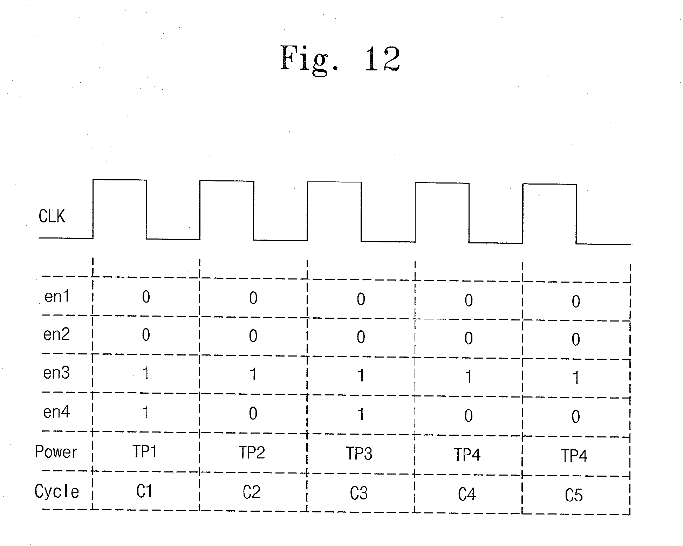

FIG. 12 illustrates a method for extracting the set P of power consumptions in FIGS. 6 and 11. Exemplarily, a method for extracting a set P of power consumptions of the first module 110 of the integrated circuit device 100 is illustrated.

Exemplarily, the integrated circuit device 100 may be driven under normal operation conditions of the integrated circuit device 100. The set P of power consumptions of the integrated circuit device 100 may be extracted under the normal operation conditions of the integrated circuit device 100. For example, a set of power consumptions may be computed by a gate-level or register transfer level power prediction program using a simulation result of a module.

Exemplarily, let it be assumed that a clock CLK having first to fifth cycles C1~C5 is input to the integrated circuit device 100 under normal operation conditions of the integrated circuit device 100.

During the first cycle C1, first to fourth driving signals en1~en4 of a first module 110 of the integrated circuit device 100 have a state of '0011' (fourth power state ps4). Let it be assumed that during the first cycle C1, power consumption of the first module 110 is a first power consumption TP1.

During the first cycle C2, first to fourth driving signals en1~en4 of a first module 110 of the integrated circuit device 100 have a state of '0010' (third power state ps3). Let it be assumed that during the second cycle C2, power consumption of the first module 110 is a second power consumption TP2.

During the third cycle C3, first to fourth driving signals en1~en4 of a first module 110 of the integrated circuit device 100 have a state of '0011' (fourth power state ps4). Let it be assumed that during the fourth cycle C4, power consumption of the first module 110 is a third power consumption TP3.

During the fourth and fifth cycles C4 and C5, first to fourth driving signals en1~en4 of a first module 110 of the integrated circuit device 100 have a state of '0010' (third power state ps3). Let it be assumed that during the fourth and fifth cycle C4 and C5, power consumptions of the first module 110 are fourth and fifth power consumptions TP4 and TP5, respectively.

During the first and third cycles C1 and C3, first to fourth driving signals en1~en4 of a first module 110 of the integrated circuit device 100 have a state of '0011' (fourth power state ps4). An average of the first and third power consumptions TP1 and TP3 corresponding to the first and third cycles C1 and C3 may be calculated as a fourth power consumption P4.

During the second, fourth, and fifth cycles C2, C4, and C5, first to fourth driving signals en1~en4 of a first module 110 of the integrated circuit device 100 have a state of '0010' (third power state ps3). An average of the second, fourth, and fifth power consumptions TP2, TP4, and TP5 corresponding to the second, fourth, and fifth cycles C2, C4, and C5 may be calculated as a third power consumption P3.

That is, power consumption of the first module 110 of the integrated circuit device 100 is evaluated or estimated under the normal operation conditions of the integrated circuit device 100. Average values of evaluated power consumptions may be calculated as the first to sixteenth power consumptions P1~P16.

Exemplarily, power consumptions based on a clock CLK may be evaluated or estimated under the normal operation conditions of the integrated circuit device 100. The arithmetic mean of evaluated power consumptions may be calculated as first to sixteenth power consumptions P1~P16.

Exemplarily, an evaluated power consumption of the first module 110 may be dynamic power consumption. For example, when signals transit based on an active clock edge at each clock gating domain, power consumption according to the transition of the signals may be evaluated or estimated. For example, power consumption according to signal transition may be calculated based on information of extracted clock gating domains.

Exemplarily, first to sixteenth power consumptions may be calculated based on data dependency. Exemplarily, power consumptions of first to fourth clock gating domains CGD1~CGD4 may vary depending on internal data changes. For example, the number of registers and internal signals transitioning at the clock gating domains CGD1~CGD4 may vary depending on input changes and internal data (state of an internal circuit). That is, the power consumption of a clock gating domain may vary depending on signal changes at the inputs to the corresponding clock gating domain.

According to an embodiment of the present invention, the first to sixteenth power consumptions P1~P16 may be calculated based on data dependency. For example, various types of data may be input to the first module 110 of the integrated circuit device 100 to calculate power consumption of the first module 110.

Returning to FIG. 6, at step S240, the fan-in logic cones of driving signals are extracted. For example, similar to the description with reference to the step S100, the fan-in logic cones of driving signals may be extracted by detecting a clock gating cell CG of the integrated circuit device 100.

For example, the fan-in logic cones of driving signals may be extracted based on a gate level GL design of the integrated circuit device 100. The fan-in logic cones of driving signals may be extracted by detecting a clock gating cell CG based on a gate-level netlist of the integrated circuit device 100. For example, the netlist may include a part defining a clock gating cell CG. The fan-in logic cones of driving signals may be extracted by detecting the part defining the clock gating cell CG and tracking an input signal of the clock gating cell CG.

For example, the fan-in logic cones of driving signals may be extracted based on a register transfer level RTL design of the integrated circuit device 100. The fan-in logic cones of driving signals may extracted by detecting a clock gating cell CG at the register transfer level RTL of the integrated circuit device 100. For example, at the register transfer level RTL of the integrated circuit device 100, a part instantiating a clock gating cell CG may be provided in form of conditional sentence. The fan-in logic cones of driving signals may be extracted by detecting the part instantiating a clock gating cell CG and tracking an input signal of the clock gating cell CG.

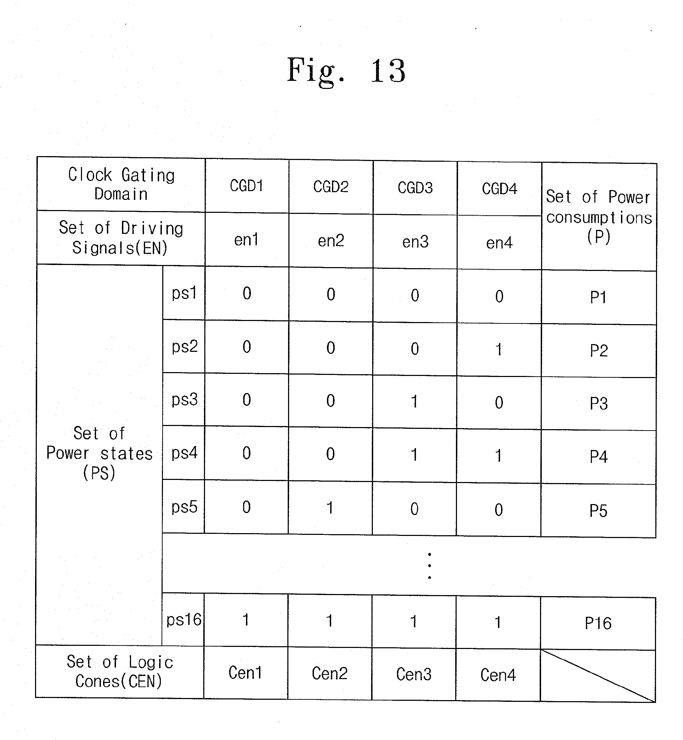

FIG. 13 is a table showing clock gating domains extracted at the step S200 in FIG. 4 and their corresponding sets of driving signals, power states, power consumptions, and extracted fan-in logic cones.

Exemplarily, clocking gating domains CGD1~CGD4, the set EN of corresponding driving signals en1~en4, the set PS of power states of the driving signals en1~en4, the set P of power consumptions, and the set CEN of the extracted fan-in logic cones are shown in FIG. 13.

The fan-in logic cones Cen1~Cen4 indicate components of a first module 110 that drives the first to fourth driving signals en1~en4 in response to input signals x1~xn of the first module 110. For example, the first to third fan-in logic cones Cen1~Cen3 may correspond to the first to third fan-in logic cones Cen1~Cen3 shown in FIG. 3. A fourth fan-in logic cone Cen4 may include the first fan-in logic cone Cen1, the first clock gating cell CG1, and a part or the whole of the first clock gating domain CGD1 which are shown in FIG. 3.

Once the fan-in logic cones Cen1~Cen4 are extracted, logic values of the first to fourth driving signals en1~en4 can be computed according to the values of input signals x1~xn of the first module 110. Once the logic values of the first to fourth driving signals en1~en4 according to the input signals x1~xn are calculated, power consumption of the first module 110 according to the input signals x1~xn can be calculated based on the set PS of power states and the set P of power consumptions.

According to an embodiment of the present invention, a set EN of power states of the driving signals en1~en4, a set P of power consumptions P1~P16, a set Cen of the fan-in logic cones Cen1~Cen4 are extracted. Power consumption of the integrated circuit device 100 can be calculated based on extracted information. For example, power consumption varying according to the input and clock signals of the integrated circuit device 100 can be calculated.

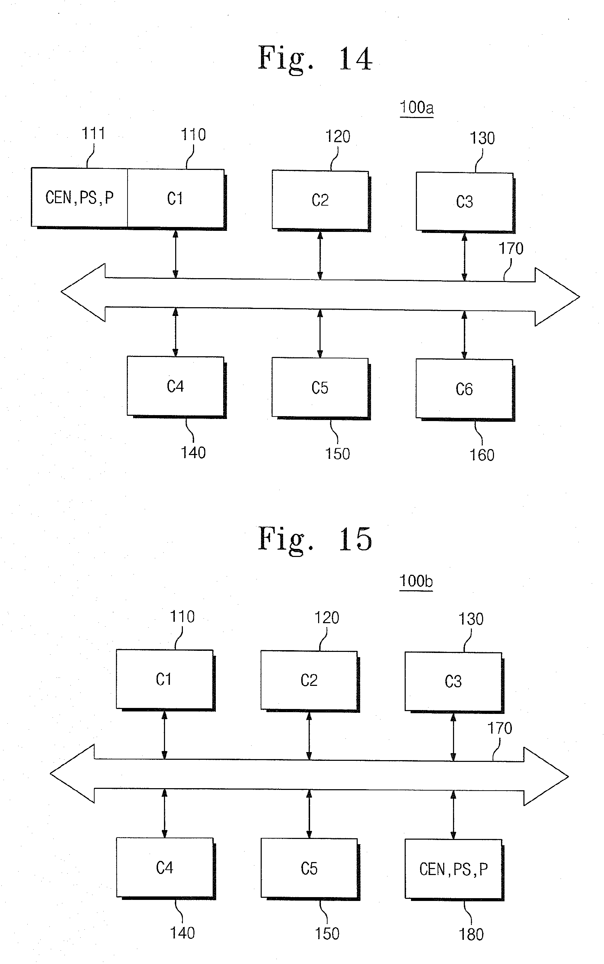

FIG. 14 is a block diagram of an integrated circuit device 100a according to a second embodiment of the present invention. As compared to the integrated circuit device 100 in FIG. 1, a first module 110 of the integrated circuit device 100a is further provided with a power model 111.

The power model 111 may include a set PS of power states of the first module 110, a set P of power consumptions, and a set CEN of fan-in logic cones. The power model 111 may be configured to share the input and clock signals with the first module 110. A power consumption model 111 may be configured to evaluate or predict power consumption of the first module 110.

Exemplarily, when power consumption models of second to sixth modules 110~160 are extracted, the power models respectively corresponding to the second to sixth modules 110~160 may be further provided. The further provided power models may evaluate or predict power consumptions of the second to sixth modules 110~160 on the fly. That is, the power consumption of the integrated circuit device 100 may be predicted.

FIG. 15 is a block diagram of an integrated circuit device 100b according to a third embodiment of the present invention. As compared to the integrated circuit device 100 in FIG. 1, a power model 180 is provided to substitute the sixth model 160.

The power model 180 may include a set PS of power states of the integrated circuit device 100b, a set P of power consumptions, and a set CEN of fan-in logic cones. The power model 180 may be configured to share an input signal and a clock with the integrated circuit device 100. The power model 180 may be configured to evaluate or predict power consumption of the integrated circuit device 100, based on the input and clock signals of the integrated circuit device 100.

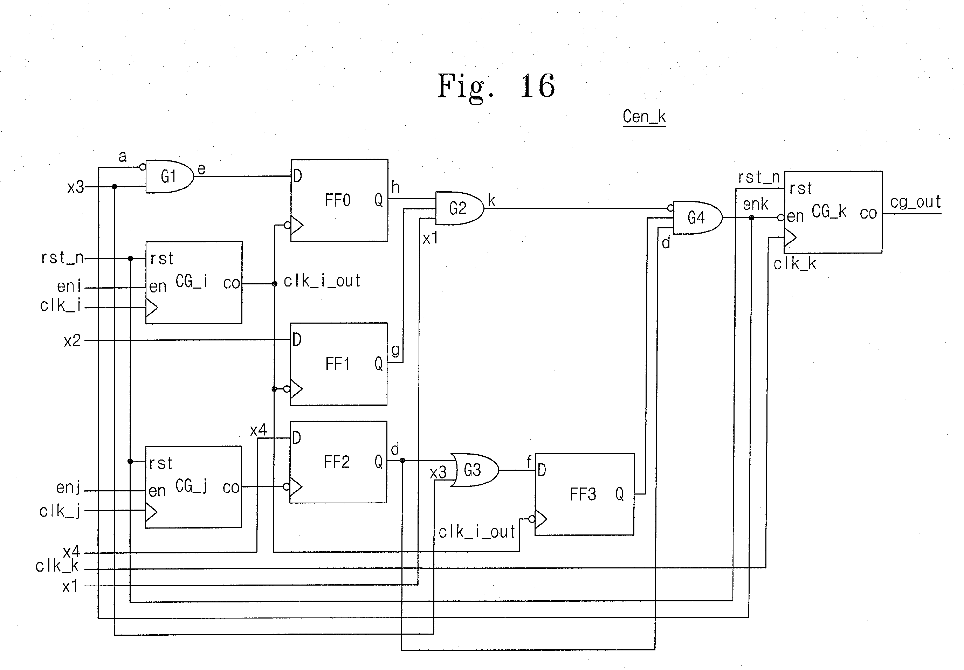

FIG. 16 is a block diagram illustrating an embodiment of a gate level GL of a fan-in logic cone Cen_k. Exemplarily, a fan-in logic cone Cen_k driving a k-th driving signal enk is shown.

Referring to FIG. 16, a fan-in logic cone Cen_k includes first to furth logic gates G1~G4, clock gating cells CG_i, CG_j, and CG_k, and zeroth to third flip-flops FF0~FF3.

The fan-in logic cone Cen_k receives first to fourth input signals x1~x4, a reset signal rst_n, driving signals eni and enj, and clocks clk_i, clk_j, and clk_k. The fan-in logic cone Cen_k is configured to drive a k-th driving signal enk in response to the first to fourth input signals x1~x4, the reset signal rst_n, the driving signals eni and enj, and the clocks clk_i, clk_j, and clk_k. The k-th clock gating cell CG_k is configured to gate the k-th clock clk_k and to output signal cg_out, in response to the k-th driving signal enk.

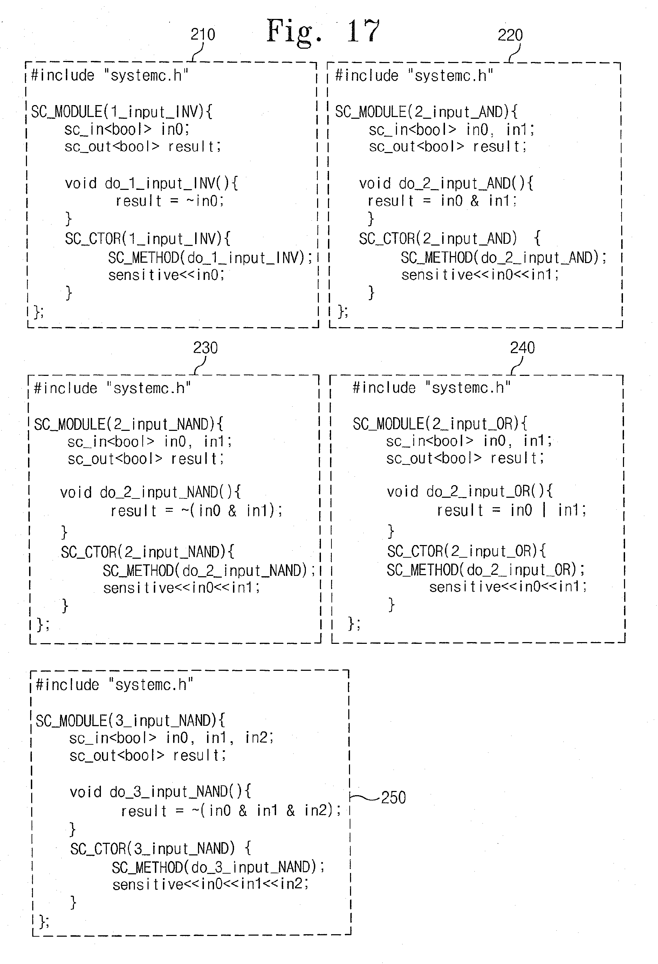

FIGS. 17 to 19 illustrate hardware description in SystemC of the fan-in logic cone Cen_k in FIG. 16.

Referring to FIGS. 16 and 17, an inverter is defined at the first module 210. A two input AND is defined at the second module 220. A two input NAND is defined at the third module 230. A two input OR is defined at the fourth module 240. A three input NAND is defined at the fifth module 250.

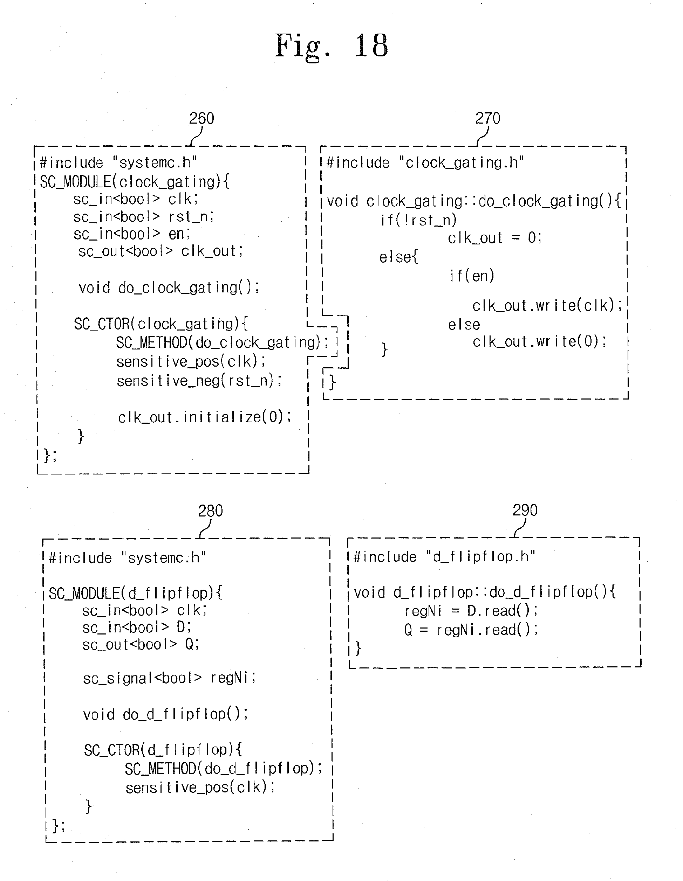

Referring to FIGS. 16 and 18, a header clock_gating.h of a clock gating cell is defined at the sixth module 260. Input/output nodes of the clock gating cell, i.e., a clock input, a reset input, a driving signal input, and a clock output are defined at the sixth module 260. In addition, operation conditions of the clock gating cell according to the clock input and the driving signal input are defined at the sixth module 260. For example, the clock gating cell is defined to operate in response to the clock input when the clock input has a positive edge and operate in response to the clock input when the reset input has a negative edge.

An operation of the clock gating cell is defined at a seventh module 270. At the seventh module 270, an operation of a clock gating cell to control a clock as logic '0' in response to a reset signal and output or block the clock in response a driving signal is defined.

A header d_flipflop.h of a flip-flop is defined at an eighth module 280. Input/output nodes of the flip-flop, i.e., a clock input, an input data D input, and an output Q input are defined at the eighth module 280. Operation conditions of the flip-flop according to the clock input are defined at the eighth module 280. For example, the flip-flop is defined to operate in response to a clock when the clock input has a positive edge.

A flip-flop is defined at a ninth module 290.

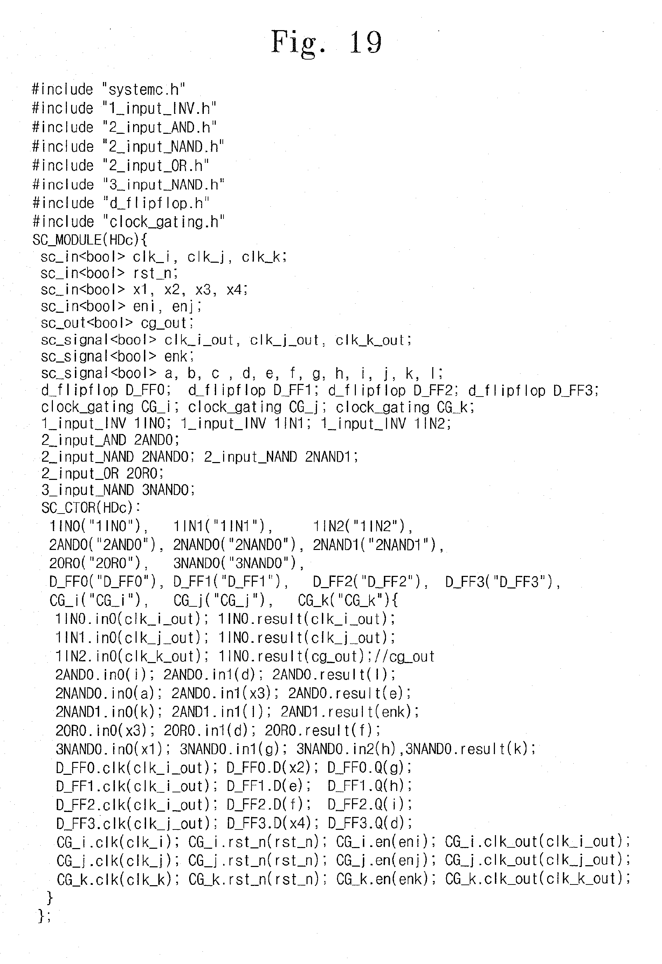

In FIG. 19, the fan-in logic cone Cen_k in FIG. 16 is defined based on the modules defined in FIGS. 17 and 18. Referring to FIGS. 16 and 19, the modules defined in FIGS. 17 and 18 are first declared. Clocks clk_i, clk_j, and clk_k, a reset signal rst_n, first to fourth input signals x1~x4, and driving signals eni and enj are defined as input signals, and a clock output cg_out is declared as an output signal.

Clock outputs clk_i_out, clk_j_oput, and clk_k_out, a k-th driving signal enk, and internal signals a, b, c, d, e, f, g, h, i, j, k, and 1 are declared as internal signals of a fan-in logic cone Cen_k. Zeroth to third flip-flops FF0~FF3 are declared. Clock gating cells CG_i, CG_j, and CG_k are declared.

Zeroth to second inverters INV0~INV2 are declared, a two input AND (AND0) is declared, two input NANDs (NAND0 and NAND1) are declared, a two input OR (OR0) are declared, and a three input NAND (3NAND0) is declared. Afterwards, a connection relationship between declared modules is defined.

As shown in FIG. 16, clocks input to flip-flops FF0~FF3 are inverted signals of output clocks clk_i_out, clk_j_out, and clk_k_out of clock gating cells CG_i, CG_j, and CG_k. Thus, the output clocks clk_i_out, clk_j_out, clk_k_out are inverted by an inverter.

AND operation with a NOT input of a signal (a) and an input of a signal x3 are defined as a signal (e). That is, a connection relationship of a first logic gate G1 is defined. NAND operation with an input of a signal (x1), an input of a signal (g), and an input of a signal (h) are defined as signal (k). That is, a connection relationship of a second logic gate G2 is defined.

OR operation with an input of a signal x3 and an input of a signal (d) are defined as a signal (f). That is, a connection relationship of a third logic gate G3 is defined. AND operation with an input of the signal (d) and an input of a signal (i) are defined as a signal (1). AND operation with an input of the signal (1) and an NOT input of the signal (k) are defined as a driving signal enk. That is, a connection relationship of a fourth logic gate G4 is defined.

A clock input (clk_i_out) of a zeroth flip-flop, a D input (x2), and a Q output (g) of a zeroth flip-flop FF0 are defined, and a clock input (clk_i_out), a D input (e), and a Q output (h) of a first flip-flop FF1 are defined. A clock input (clk_i_out), a D input (f), and a Q output (i) of a second flip-flop FF2 are defined, and a clock input (clk_j_out), a D input, and a Q output (d) of a third flip-flop FF3 are defined. That is, a connection relationship of the zeroth to third flip-flops FF0~FF3 is defined.

A clock input (clk_i), a reset input (rst_n), a driving signal input (eni), and a clock output (clk_i_out) of a clock gating cell (CG_i) are defined. A clock input (clk_j), a reset input (rst_n), a driving signal input (enj), and a clock output (clk_j_out) of a clock gating cell (CG_k) are defined. That is, a connection relationship of clock gating cells is defined.

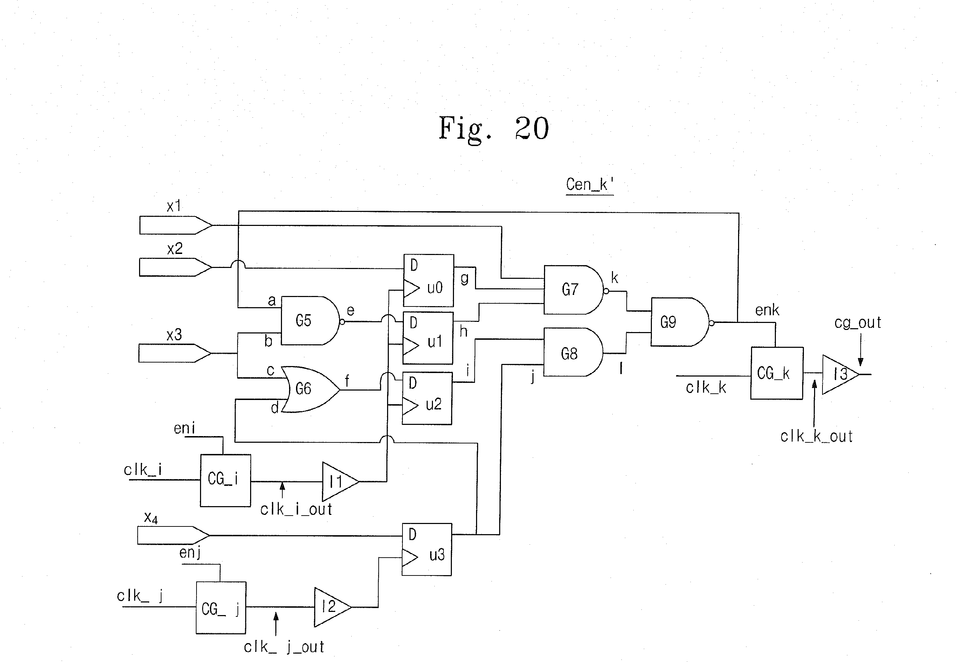

FIG. 20 is a block diagram illustrating a second embodiment of a gate level GL of a fan-in logic cone Cen_k'. Exemplarily, a fan-in logic cone Cen_k' driving a k-th driving signal enk is shown.

Referring to FIG. 20, the fan-in logic cone Cen_k' includes fifth to ninth logic gates G5~G9, clock gating cells CG_i, CG_j, and CG_k, and zeroth to third flip-flops u0~u3.

The fan-in logic cone Cen_k' receives first to fourth signals x1~x4, a reset signal rst_n, driving signals eni and enj, and clocks clk_i, clk_j, and clk_k. The fan-in logic cone Cen_k' is configured to drive the k-th driving signal enk in response to the first to fourth signals x1~x4,the reset signal rst_n, the driving signals eni and enj, and the clocks clk_i, clk_j, and clk_k. A seventh clock gating cell CG7 is configured to output the k-th clock clk_k after gating the same.

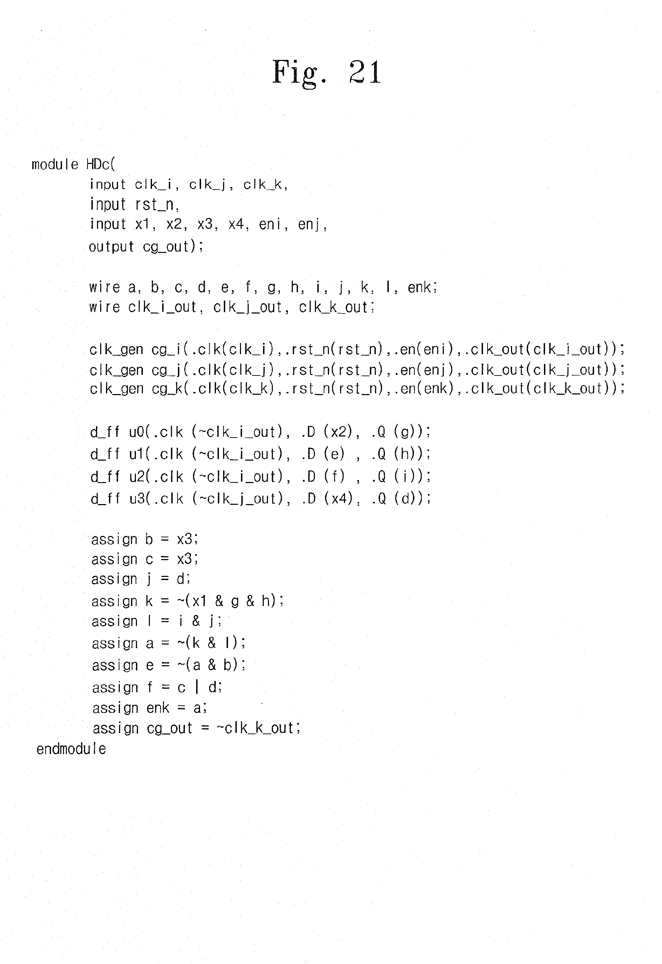

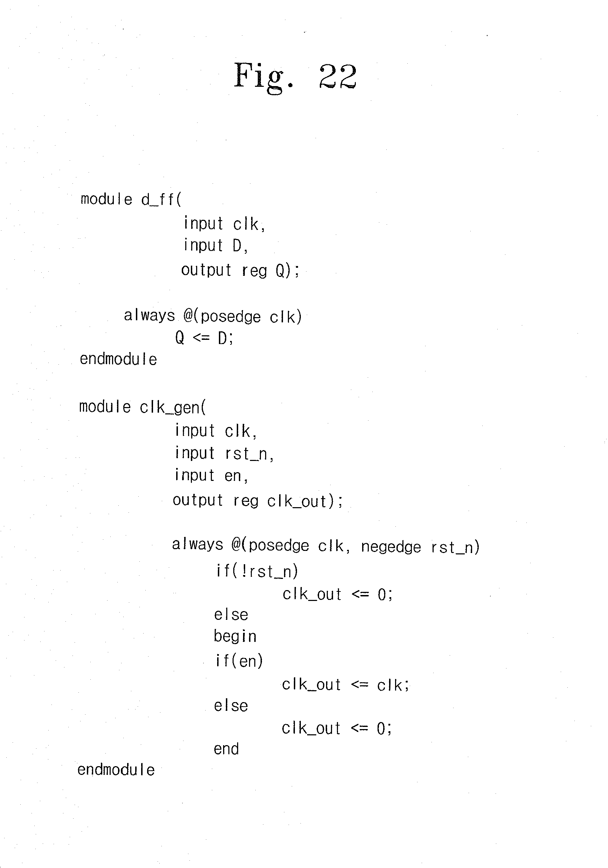

FIGS. 21 and 22 show hardware description in Verilog of the fan-in logic cone Cen_k' in FIG. 20. Referring to FIGS. 20 and 21, input clocks clk_i, clk_j, and clk_k, a reset signal rst_n, first to fourth signals x1~x4,and driving signals eni and enj are defined as input signals of the fan-in logic cone Cen_k', and a clock output cg_out is defined as an output signal thereof.

Internal wirings (a, b, c, d, e, f, g, h, i, j, k, l, enk, clk_i_out, clk_j_out, and clk_k_out) are defined.

A clock gating cell CG_i is defined. Input signals clk_i, rst_n, and eni are defined at a clock input, a reset input, and a driving signal input, respectively. An output node is connected to the wiring (clk_i_out).

A clock gating cell CG_j is defined. Input signals clk_j, rst_n, and enj are defined at a clock input, a reset input, and a driving signal input, respectively. An output node is connected to the wiring (clk_j_out).

A clock gating cell CG_k is defined. Input signals clk_k and rst_n are defined at a clock input and a rest input, respectively. Wirings (enk and clk_j_out) are connected to a driving signal input and an output node, respectively.

Zeroth to third flip-flops u0~u3 are defined. An input signal x2 is transmitted to a D input of the zeroth flip-flop u0. Wirings (clk_i_out and g) are connected to a clock input and a Q output of the zeroth flip-flop u0, respectively. Wirings (clk_i_out, e, and h) are connected to a clock input, a D input, and a Q output of the first flip-flop u1, respectively.

Wirings (clk_i_out, f, and i) are connected to a clock input, a D input, and a Q output of the second flip-flop u2, respectively. An input signal x4 is transmitted to a D input of a third flip-flop u3. Wirings (clk_j_out and d) are connected to a clock input and a Q output of the third flip-flop u3, respectively.

Thereafter, a connection relationship between wirings is defined. Wirings (b and c) are defined to be commonly connected to transmit the input signal x3. Wirings (j and d) are defined to be commonly connected.

A wiring (k) is defined to transfer NAND of an input signal x1 and signals received through wirings (g and h). That is, a seventh logic gate G7 is defined. The wiring (l) is defined to transfer AND of signals transmitted through the wirings (i and j). That is, an eighth logic gate G8 is defined.

A wiring (a) is configured to transfer NAND of signals transmitted through the wirings (k and l). That is, a ninth logic gate G9 is defined. A wiring (e) is defined to transfer NAND of signals transmitted through wirings (a and b). That is, a fifth gate G5 is defined. A wiring (f) is defined to transfer OR of signals transmitted through wirings (c and d). That is, a sixth logic gate G6 is defined.

Wirings (enk and a) are defined to be commonly connected. An output signal cg_out is defined to be an inverted version of a clock transmitted through the wiring (clk_k_out).

In FIG. 22, a flip-flop and a clock gating cell are defined. Referring to FIG. 22, the flip-flop is defined to transmit an input signal to an output node in response to a clock. The clock gating cell is defined to initialize an output in response to a reset signal rst_n and defined to transmit an input clock to an output node in response to a driving signal en.

As described above, according to an embodiment of the present invention, power consumption of an integrated circuit device is estimated based on clock gating domains. Thus, accuracy of evaluating the power consumption is improved. In addition, according to an embodiment of the present invention, power consumption is evaluated based on the input signals of an integrated circuit device 100 or the input signals of a module of the integrated circuit device 100. Thus, since the power consumption may be evaluated or estimated at an electronic system level (ESL), power consumption prediction may be conducted at high speed. That is, an embodiment of the present invention provides a power consumption prediction method with improved accuracy and speed.

In the above-described embodiment, hardware description (HDL) at a gate level GL of the integrated circuit device 100 has been explained based on a SystemC and Verilog. However, it will be understood that the hardware description (HDL) of the integrated circuit device is not limited to a SystemC and Verilog.

In the above-described embodiment, it has been explained that a set P of power consumptions corresponding to a set EN of power states of driving signals is extracted. However, power consumptions respectively corresponding to driving signals en may be calculated. Exemplarily, there are first to fourth driving signals en1~en4 at a specific module of an integrated circuit device, first to fourth power consumptions P1~P4 respectively corresponding to the first to fourth driving signals en1~en4 may be extracted. Exemplarily, when first and second driving signals en1 and en2 remains enabled, power consumption of a specific module may be evaluated as the sum of first and second power consumptions P1 and P2.

Exemplarily, power consumptions respectively corresponding to driving signals may be calculated from a set of power states of the driving signals and a set of corresponding power consumptions. For example, let it be assumed that there are first to fourth driving signals en1~en4 at a specific module of an integrated circuit device. Power consumption corresponding to the third driving signal en3 may be calculated based on power consumption when a power state of the first to fourth driving signals en1~en4 is '0010'. Similarly, power consumption corresponding to the fourth driving signal en4 may be calculated based on power consumption when the power states of the first to fourth are '1100' and '1101'.

When power consumptions respectively corresponding to driving signals en are calculated, a power consumption model may be reduced. This is because the amount of data including the driving signals en and the power consumptions respectively corresponding to the driving signals en is smaller than that of data including the set EN of power states of the driving signals and a set P of corresponding power consumptions.

Exemplarily, the technical concept of the present invention has been described based on a clock gating domain. However, the technical concept of the present invention is not limited to the clock gating domain. For example, the technical concept of the present invention may be applied to a power gating domain.

Driving signals described with reference to FIGS. 1 to 22 may be applied as signals for stopping and resuming power supply of a power gating domain. A clock gating cell CG may be applied as a power gating cell. A clock gating domain CGD may be applied as a power gating domain. A fan-in logic cone may be applied as a fan-in logic cone to generate a driving signal for controlling a power gating domain. Power consumption may be applied as power consumption of the power gating domain.

When power consumption of an integrated circuit device is evaluated based on a power gating domain, evaluation speed and accuracy of static power consumption of the integrated circuit device may also be improved.

When power consumption of an integrated circuit device is evaluated based on both clock gating domains and power gating domains, evaluation speed and accuracy of dynamic and static powers of an integrated circuit device may be improved.

According to the present invention described so far, power consumption of an integrated circuit device is evaluated or estimated based on clock gating domains. Thus, the time required for evaluating and estimating the power consumption of the integrated circuit device is reduced to improve evaluation accuracy.

Although the present invention has been described in connection with the embodiment of the present invention illustrated in the accompanying drawings, it is not limited thereto. It will be apparent to those skilled in the art that various substitutions, modifications and changes may be made without departing from the scope and spirit of the present invention.

**Claims**

1. A power consumption prediction method for an integrated circuit device, comprising:

    detecting a clock gating cell of the integrated circuit device to extract clock gating domains of the integrated circuit device;
    extracting a power consumption model of the integrated circuit device according to clock gating based on the extracted clock gating domains; and
    estimating power consumption of the integrated circuit device based on the extracted power consumption model.

2. The power consumption prediction method as set forth in claim 1, wherein extracting a power consumption model comprises:

    extracting driving signals driving the extracted clock gating domains; and
    extracting a set of power states according to logical values of the extracted driving signals.

3. The power consumption prediction method as set forth in claim 2, wherein some of the extracted power states are removed based on equivalence between the driving signals.

4. The power consumption prediction method as set forth in claim 2, wherein some of the extracted power states are removed based on dominance between the driving signals.

5. The power consumption prediction method as set forth in claim 2, wherein extracting a power model further comprises:

    extracting a set of power consumptions of the integrated circuit device corresponding to the extracted set of power states.

6. The power consumption prediction method as set forth in claim 5, wherein extracting a set of power consumptions comprises:

    calculating power states and power consumptions of the integrated circuit device according to a clock cycle under normal operation conditions of the integrated circuit device; and
    determining power consumptions corresponding to the calculated power states based on the calculated power states and power consumptions.

7. The power consumption prediction method as set forth in claim 6, wherein determining power consumptions corresponding to the calculated power states comprises:

    determining average power consumptions corresponding to the calculated power states based on the calculated power states and power consumptions.

8. The power consumption prediction method as set forth in claim 7, wherein the average power consumptions are determined to compensate variation depending on data dependency.

9. The power consumption prediction method as set forth in claim 1, wherein extracting a power model comprises:

    extracting driving signals driving the clock gating domains; and
    determining power consumptions respectively corresponding to the driving signals.

10. The power consumption prediction method as set forth in claim 9, wherein extracting a power consumption model further comprises:

    extracting the fan-in logic cones driving the driving signals based on input signals of the integrated circuit device.

**11.** The power consumption prediction method as set forth in claim 10, wherein estimating power consumption of the integrated circuit device comprises:

estimating power consumption of the integrated circuit device based on input signals of the integrated circuit device, the extracted set of power states, and the extracted set of power consumptions.

**12.** The power consumption prediction method as set forth in claim 1, wherein the clock gating domains are extracted based on a register transfer level of the integrated circuit device.

**13.** The power consumption prediction method as set forth in claim 1, wherein the clock gating domains are extracted based on a gate level of the integrated circuit device.

**14.** The power consumption prediction method as set forth in claim 1, further comprising:

extracting power gating domains of the integrated circuit device;
extracting a power consumption model of the integrated circuit device based on power gating, based on the extracted power gating domains; and
estimating power consumption of the integrated circuit device based on the extracted power consumption model.

**15.** The power consumption prediction method as set forth in claim 2, wherein extracting a set of power states comprises:

sequentially selecting the extracted driving signals and enabling the sequentially selected driving signals to extract power states.

**16.** A power consumption prediction method for an integrated circuit device, comprising:

extracting fan-in logic cones of clock driving signals of the integrated circuit device;
calculating power consumptions according to logic states of the clock driving signals;
receiving the input signals including the clock signals transmitted to the integrated circuit device; and
estimating power consumption of the integrated circuit device based on the extracted fan-in logic cones, the calculated power consumptions, and the received input signals and the clock signals.

**17.** The power consumption prediction method as set forth in claim 16, wherein the power consumption of the integrated circuit device is estimated according to variation of the received input signal and clock signals.

# Fig. 1

# Fig. 2

# Fig. 3

EP 2 610 702 A2

# Fig. 4

```
           ( Start )
               │
               ▼
┌─────────────────────────────────┐
│   Extract clock gating domains  │──── S100
└─────────────────────────────────┘
               │
               ▼
┌─────────────────────────────────┐
│   Extract power consumption model│──── S200
│   based on the clock gating domains│
└─────────────────────────────────┘
               │
               ▼
┌─────────────────────────────────┐
│   Evaluate power consumption of │
│   integrated circuit device based on │──── S300
│   the extracted power consumption model │
└─────────────────────────────────┘
               │
               ▼
           ( End )
```

# Fig. 5

| Clock Gating Domain | CGD1 | CGD2 | CGD3 | CGD4 |
|---|---|---|---|---|

# Fig. 6

```
                    ( Start )
                        │
                        ▼
        ┌──────────────────────────────┐
        │  Extract a set of driving     │
        │  signals of                   │──S210
        │  clock gating domains         │
        └──────────────────────────────┘
                        │
                        ▼
        ┌──────────────────────────────┐
        │  Extract a set of power       │
        │  states                       │──S220
        │  corresponding to the set of  │
        │  driving signals              │
        └──────────────────────────────┘
                        │
                        ▼
        ┌──────────────────────────────┐
        │  Extract a set of power       │──S230
        │  consumptions                 │
        └──────────────────────────────┘
                        │
                        ▼
        ┌──────────────────────────────┐
        │  Extract logic cones of the   │──S240
        │  driving signals              │
        └──────────────────────────────┘
                        │
                        ▼
                    ( End )
```

# Fig. 7

| Clock Gating Domain | CGD1 | CGD2 | CGD3 | CGD4 |
|---|---|---|---|---|
| Set of Driving Signals(EN) | en1 | en2 | en3 | en4 |

# Fig. 8

| Clock Gating Domain | | CGD1 | CGD2 | CGD3 | CGD4 |
|---|---|---|---|---|---|
| Set of Driving Signals(EN) | | en1 | en2 | en3 | en4 |
| Set of Power states (PS) | ps1 | 0 | 0 | 0 | 0 |
| | ps2 | 0 | 0 | 0 | 1 |
| | ps3 | 0 | 0 | 1 | 0 |
| | ps4 | 0 | 0 | 1 | 1 |
| | ps5 | 0 | 1 | 0 | 0 |
| | ⋮ | | | | |
| | ps16 | 1 | 1 | 1 | 1 |

# Fig. 9

| Clock Gating Domain | | CGD1 | CGD2 | CGD3 | CGD4 |
|---|---|---|---|---|---|
| Set of Driving Signals(EN) | | en1 | en2 | en3 | en4 |
| Set of Power states (PS) | ps1 | 0 | | 0 | 0 |
| | ps2 | 0 | | 0 | 1 |
| | ps3 | 0 | | 1 | 0 |
| | ps4 | 0 | | 1 | 1 |
| | ps5 | 1 | | 0 | 0 |
| | ps6 | 1 | | 0 | 1 |
| | ps7 | 1 | | 1 | 0 |
| | ps8 | 1 | | 1 | 1 |

# Fig. 10

| Clock Gating Domain | | CGD1 | CGD2 | CGD3 | CGD4 |
|---|---|---|---|---|---|
| Set of Driving Signals(EN) | | en1 | en2 | en3 | en4 |
| Set of Power states (PS) | ps1 | 0 | | 0 | 0 |
| | ps2 | 0 | | 1 | 0 |
| | ps3 | 1 | | 0 | 0 |
| | ps4 | 1 | | 0 | 1 |
| | ps5 | 1 | | 1 | 0 |
| | ps6 | 1 | | 0 | 1 |

# Fig. 11

| Clock Gating Domain | | CGD1 | CGD2 | CGD3 | CGD4 | Set of Power consumptions (P) |
|---|---|---|---|---|---|---|
| Set of Driving Signals(EN) | | en1 | en2 | en3 | en4 | |
| Set of Power states (PS) | ps1 | 0 | 0 | 0 | 0 | P1 |
| | ps2 | 0 | 0 | 0 | 1 | P2 |
| | ps3 | 0 | 0 | 1 | 0 | P3 |
| | ps4 | 0 | 0 | 1 | 1 | P4 |
| | ps5 | 0 | 1 | 0 | 0 | P5 |
| | ⋮ | | | | | |
| | ps16 | 1 | 1 | 1 | 1 | P16 |

Fig. 12

| CLK | | | | | |
|-----|-----|-----|-----|-----|-----|
| en1 | 0 | 0 | 0 | 0 | 0 |
| en2 | 0 | 0 | 0 | 0 | 0 |
| en3 | 1 | 1 | 1 | 1 | 1 |
| en4 | 1 | 0 | 1 | 0 | 0 |
| Power | TP1 | TP2 | TP3 | TP4 | TP4 |
| Cycle | C1 | C2 | C3 | C4 | C5 |

# Fig. 13

| Clock Gating Domain | | CGD1 | CGD2 | CGD3 | CGD4 | Set of Power consumptions (P) |
|---|---|---|---|---|---|---|
| Set of Driving Signals(EN) | | en1 | en2 | en3 | en4 | |
| Set of Power states (PS) | ps1 | 0 | 0 | 0 | 0 | P1 |
| | ps2 | 0 | 0 | 0 | 1 | P2 |
| | ps3 | 0 | 0 | 1 | 0 | P3 |
| | ps4 | 0 | 0 | 1 | 1 | P4 |
| | ps5 | 0 | 1 | 0 | 0 | P5 |
| | | | | ⋮ | | |
| | ps16 | 1 | 1 | 1 | 1 | P16 |
| Set of Logic Cones(CEN) | | Cen1 | Cen2 | Cen3 | Cen4 | |

# Fig. 14

# Fig. 15

Fig. 16

Cen_k

# Fig. 17

210

```
#include "systemc.h"

SC_MODULE(1_input_INV){
    sc_in<bool> in0;
    sc_out<bool> result;

    void do_1_input_INV(){
        result = ~in0;
    }
    SC_CTOR(1_input_INV){
        SC_METHOD(do_1_input_INV);
        sensitive<<in0;
    }
};
```

220

```
#include "systemc.h"

SC_MODULE(2_input_AND){
    sc_in<bool> in0, in1;
    sc_out<bool> result;

    void do_2_input_AND(){
        result = in0 & in1;
    }
    SC_CTOR(2_input_AND) {
        SC_METHOD(do_2_input_AND);
        sensitive<<in0<<in1;
    }
};
```

230

```
#include "systemc.h"

SC_MODULE(2_input_NAND){
    sc_in<bool> in0, in1;
    sc_out<bool> result;

    void do_2_input_NAND(){
        result = ~(in0 & in1);
    }
    SC_CTOR(2_input_NAND){
        SC_METHOD(do_2_input_NAND);
        sensitive<<in0<<in1;
    }
};
```

240

```
#include "systemc.h"

SC_MODULE(2_input_OR){
    sc_in<bool> in0, in1;
    sc_out<bool> result;

    void do_2_input_OR(){
        result = in0 | in1;
    }
    SC_CTOR(2_input_OR){
        SC_METHOD(do_2_input_OR);
        sensitive<<in0<<in1;
    }
};
```

250

```
#include "systemc.h"

SC_MODULE(3_input_NAND){
    sc_in<bool> in0, in1, in2;
    sc_out<bool> result;

    void do_3_input_NAND(){
        result = ~(in0 & in1 & in2);
    }
    SC_CTOR(3_input_NAND) {
        SC_METHOD(do_3_input_NAND);
        sensitive<<in0<<in1<<in2;
    }
};
```

# Fig. 18

260

```
#include "systemc.h"
SC_MODULE(clock_gating){
    sc_in<bool> clk;
    sc_in<bool> rst_n;
    sc_in<bool> en;
    sc_out<bool> clk_out;

    void do_clock_gating();

    SC_CTOR(clock_gating){
        SC_METHOD(do_clock_gating);
        sensitive_pos(clk);
        sensitive_neg(rst_n);

        clk_out.initialize(0);
    }
};
```

270

```
#include "clock_gating.h"

void clock_gating::do_clock_gating(){
    if(!rst_n)
        clk_out = 0;
    else{
        if(en)
            clk_out.write(clk);
        else
            clk_out.write(0);
    }
}
```

280

```
#include "systemc.h"

SC_MODULE(d_flipflop){
    sc_in<bool> clk;
    sc_in<bool> D;
    sc_out<bool> Q;

    sc_signal<bool> regNi;

    void do_d_flipflop();

    SC_CTOR(d_flipflop){
        SC_METHOD(do_d_flipflop);
        sensitive_pos(clk);
    }
};
```

290

```
#include "d_flipflop.h"

void d_flipflop::do_d_flipflop(){
    regNi = D.read();
    Q = regNi.read();
}
```

# Fig. 19

```
#include "systemc.h"
#include "1_input_INV.h"
#include "2_input_AND.h"
#include "2_input_NAND.h"
#include "2_input_OR.h"
#include "3_input_NAND.h"
#include "d_flipflop.h"
#include "clock_gating.h"
SC_MODULE(HDc){
 sc_in<bool> clk_i, clk_j, clk_k;
 sc_in<bool> rst_n;
 sc_in<bool> x1, x2, x3, x4;
 sc_in<bool> eni, enj;
 sc_out<bool> cg_out;
 sc_signal<bool> clk_i_out, clk_j_out, clk_k_out;
 sc_signal<bool> enk;
 sc_signal<bool> a, b, c , d, e, f, g, h, i, j, k, l;
 d_flipflop D_FF0;  d_flipflop D_FF1; d_flipflop D_FF2; d_flipflop D_FF3;
 clock_gating CG_i; clock_gating CG_j; clock_gating CG_k;
 1_input_INV 1IN0; 1_input_INV 1IN1; 1_input_INV 1IN2;
 2_input_AND 2AND0;
 2_input_NAND 2NAND0; 2_input_NAND 2NAND1;
 2_input_OR 2OR0;
 3_input_NAND 3NAND0;
 SC_CTOR(HDc):
 1IN0("1IN0"),    1IN1("1IN1"),      1IN2("1IN2"),
 2AND0("2AND0"), 2NAND0("2NAND0"), 2NAND1("2NAND1"),
 2OR0("2OR0"),    3NAND0("3NAND0"),
 D_FF0("D_FF0"), D_FF1("D_FF1"),   D_FF2("D_FF2"),  D_FF3("D_FF3"),
 CG_i("CG_i"),    CG_j("CG_j"),    CG_k("CG_k"){
 1IN0.in0(clk_i_out); 1IN0.result(clk_i_out);
 1IN1.in0(clk_j_out); 1IN0.result(clk_j_out);
 1IN2.in0(clk_k_out); 1IN0.result(cg_out);//cg_out
 2AND0.in0(i); 2AND0.in1(d); 2AND0.result(l);
 2NAND0.in0(a); 2AND0.in1(x3); 2AND0.result(e);
 2NAND1.in0(k); 2AND1.in1(l); 2AND1.result(enk);
 2OR0.in0(x3); 2OR0.in1(d); 2OR0.result(f);
 3NAND0.in0(x1); 3NAND0.in1(g); 3NAND0.in2(h),3NAND0.result(k);
 D_FF0.clk(clk_i_out); D_FF0.D(x2); D_FF0.Q(g);
 D_FF1.clk(clk_i_out); D_FF1.D(e);  D_FF1.Q(h);
 D_FF2.clk(clk_i_out); D_FF2.D(f);  D_FF2.Q(i);
 D_FF3.clk(clk_j_out); D_FF3.D(x4); D_FF3.Q(d);
 CG_i.clk(clk_i); CG_i.rst_n(rst_n); CG_i.en(eni); CG_i.clk_out(clk_i_out);
 CG_j.clk(clk_j); CG_j.rst_n(rst_n); CG_j.en(enj); CG_j.clk_out(clk_j_out);
 CG_k.clk(clk_k); CG_k.rst_n(rst_n); CG_k.en(enk); CG_k.clk_out(clk_k_out);
 }
};
```

Fig. 20

# Fig. 21

```
module HDc(
        input clk_i, clk_j, clk_k,
        input rst_n,
        input x1, x2, x3, x4, eni, enj,
        output cg_out);

        wire a, b, c, d, e, f, g, h, i, j, k, l, enk;
        wire clk_i_out, clk_j_out, clk_k_out;

        clk_gen cg_i(.clk(clk_i),.rst_n(rst_n),.en(eni),.clk_out(clk_i_out));
        clk_gen cg_j(.clk(clk_j),.rst_n(rst_n),.en(enj),.clk_out(clk_j_out));
        clk_gen cg_k(.clk(clk_k),.rst_n(rst_n),.en(enk),.clk_out(clk_k_out));

        d_ff u0(.clk (~clk_i_out), .D (x2), .Q (g));
        d_ff u1(.clk (~clk_i_out), .D (e) , .Q (h));
        d_ff u2(.clk (~clk_i_out), .D (f) , .Q (i));
        d_ff u3(.clk (~clk_j_out), .D (x4), .Q (d));

        assign b = x3;
        assign c = x3;
        assign j = d;
        assign k = ~(x1 & g & h);
        assign l = i & j;
        assign a = ~(k & l);
        assign e = ~(a & b);
        assign f = c | d;
        assign enk = a;
        assign cg_out = ~clk_k_out;
endmodule
```

# Fig. 22

```
module d_ff(
            input clk,
            input D,
            output reg Q);

     always @(posedge clk)
            Q <= D;
endmodule

module clk_gen(
            input clk,
            input rst_n,
            input en,
            output reg clk_out);

            always @(posedge clk, negedge rst_n)
                if(!rst_n)
                        clk_out <= 0;
                else
                begin
                if(en)
                        clk_out <= clk;
                else
                        clk_out <= 0;
                end
endmodule
```

# Fig. 23

| Clock Gating Domain | | CGD1 | CGD2 | CGD3 | CGD4 | Set of Power consumptions (P) |
|---|---|---|---|---|---|---|
| Set of Driving Signals(EN) | | en1 | en2 | en3 | en4 | |
| Set of Power states (PS) | ps1 | 1 | 0 | 0 | 0 | P1 |
| | ps2 | 0 | 1 | 0 | 0 | P2 |
| | ps3 | 0 | 0 | 1 | 0 | P3 |
| | ps4 | 0 | 0 | 0 | 1 | P4 |